# EUROPEAN PATENT APPLICATION

(11) **EP 4 006 219 A1**
(43) Date of publication of application: **01.06.2022**
(21) Application number: 20210610.0
(22) Date of filing: 30.11.2020
(51) Int. Cl.: D03D 1/00, D03D 15/283, D03D 15/41, D03D 15/513, D03D 15/573, B32B 5/02

(54) **COATED WOVEN FABRIC FOR PROTECTIVE CLOTHING**

(71) Applicant: Rybchak, Nina, 1216 LK Hilversum (NL)
(72) Inventor: Rybchak, Nina, 1216 LK Hilversum (NL)
(74) Representative: Renkema, Jaap

(57) **Abstract**

The invention relates to a coated woven fabric comprising
- an impregnated woven structure comprising a woven structure of plain woven yarns of twisted para-aramid fibers, wherein the impregnated woven structure is impregnated with an organofluorine compound and the fibers have a linear density of 350 to 1000 dtex and
- a coating layer comprising a polyurethane provided on at least one side of the impregnated woven structure.

## Description

The present invention relates to a woven fabric and a protective clothing comprising the woven fabric, in particular a firefighter protective clothing.

In known protective clothing for firefighters, the outermost layer consists of a waterproof membrane layer provided with a fire resistant textile layer. While the known firefighter protective clothing is satisfactory in some situations, there is still a need in the industry for a firefighter protective clothing which allows the firefighters to work more efficiently and safely.

It is an objective of the invention to provide a material which can be used as the outermost layer of a protective clothing having a combination of desirable properties which allows the firefighters to work more efficiently and safely.

Accordingly, the present invention provides a coated woven fabric comprising
- an impregnated woven structure comprising a woven structure of plain woven yarns of twisted para-aramid fibers, wherein the impregnated woven structure is impregnated with an organofluorine compound and the fibers have a linear density of 350 to 1000 dtex and
- a coating layer comprising a polyurethane provided on at least one side of the impregnated woven structure.

It has surprisingly been found that the coated woven fabric according to the invention is fire resistant, waterproof and has good mechanical properties while being lightweight. Due to the absence of the membrane as well as the relatively small weight of the impregnated woven structure, the coated woven fabric according to the invention is substantially lighter than the known two-layer structure of a waterproof membrane layer provided with a fire resistant textile layer. This allows the coated woven fabric according to the invention to be used for making a protective clothing such as a firefighter protective clothing which is lightweight while having desirable properties. The small weight of a protective clothing allows the wearer of the protective clothing to work efficiently.

### Impregnated woven structure

### Yarns

Preferably, the yarns of the twisted para-aramid fibers have a twisting level Z of 100 to 150. It was found that this results in the desirable mechanical properties of the woven fabric according to the invention.

Preferably, the para-aramid fibers are fibers of polyparaphenylene terephthalamide (commercially available as Kevlar (trademark) from du Pont Co.) and/or copolyparaphenylene-3,4'-oxydiphenylene terephthalamide (commercially available as Technora (trademark) from Teijin Co.).

The linear density of 350 to 1000 dtex of the para-aramid fibers leads to the fabric according to the invention which has a combination of a small weight and good tensile/tear strength as well as high resistance to multiple bending.

Preferably, the linear density of the fibers is 370 to 900 dtex, preferably 380 to 800 dtex, more preferably 390 to 700 dtex, more preferably 400 to 600 dtex, more preferably 410 to 500 dtex, more preferably 420 to 450 dtex.

The weaving of the yarns is performed by plain weaving. It was found that a woven structure made by other types of weaving, such as twill weaving, becomes heavier for achieving the same level of water resistance. The woven structure consists of warp yarns and weft yarns. The weight ratio between the warp yarns and the weft yarns may e.g. be 3:7 to 7:3.

### Impregnation

The impregnated woven structure according to the invention may be made by weaving the yarns to obtain a woven structure followed by impregnating the woven structure with the organofluorine compound. The impregnation results in a structure by which a better contact is ensured between the impregnated woven structure and the coating layer comprising the polyurethane.

The impregnation may be performed by immersing the woven structure in an aqueous impregnation solution comprising the organofluorine compound and optional components and curing the solution by which the organofluorine compound and the optional components are fixed on the woven structure. The immersion may be performed in one step or two or more steps.

### Organofluorine compound

The organofluorine compound gives the impregnated woven structure water-oil repellent properties as well as shaping properties. It further prevents the composition of the coating layer from penetrating to the opposite side of the coated side.

The organofluorine compound may be a polymer comprising repeat units of a fluorine-containing vinyl monomer. The polymer may be a homopolymer of one type of the fluorine-containing vinyl monomer or a copolymer of two or more types of the fluorine-containing vinyl monomer.

By the term "fluorine-containing vinyl monomer" is meant a compound having at least one polymerizable carbon-to-carbon double bond and at least one hydrogen atom substituted with fluorine atom in the molecule.

For example, the fluorine-containing vinyl monomer may be selected from monomers represented by the following general formula:

CF₂=CF-(O)ₗ-[-(CF₂)ₘ-(CFX)ₙ-(O)ₚ-]-ᵣ(CFX')_{q}-Y

wherein I and p are 0 or 1, m, n, r and q stand for an integer of from 0 to 4, X and X' stand for F, H, Cl or -CF₃, and Y stands for -SO₂-A (in which A stands for OM (M is H⁺ or a metal ion), F, Cl or Br), 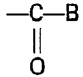 (in which B stands for A or OR (R is an alkyl group such as methyl or ethyl)), -CN, - CF₃ or -CF=CF₂.

The polymer may comprise repeat units of further comonomers. Preferably, the amount of the repeat units of the fluorine-containing vinyl monomer with respect to the polymer is at least 50 wt%, at least 70 wt%, at least 90 wt% or at least 95 wt%.

Preferably, the amount of the organofluorine compound with respect to the woven structure is 0.05 to 0.20 g/m², more preferably 0.09 to 0.15 g/m².

Herein, when an amount of a compound is mentioned, it refers to the weight of the compound in relation to 1 m² of the non-impregnated woven structure.

The organofluorine compound may be applied as an aqueous composition comprising the organofluorine compound e.g. in an amount of 10 to 30 wt%.

### Other components of impregnating solution

The impregnated woven structure may further comprise a crosslinking agent and/or a flame retardant.

The crosslinking agent may e.g. be a polyisocyanate. By the use of the crosslinking agent, water-oil-dirt-repellent properties and resistance to water column pressure are enhanced.

Preferably, the amount of the crosslinking agent with respect to the woven structure is 0.10 to 0.25 g/m².

Preferably, the weight ratio of the crosslinking agent to the organofluorine compound in the impregnated woven structure is 0.9 to 2.5, for example 1.0 to 2.0.

Preferably, the flame retardant comprises ammonium polyphosphate, more preferably ammonium polyphosphate with crystalline phase 1 having less than 1000 repeat units. The flame retardant ensures that the impregnated woven structure is flame-retardant.

Preferably, the amount of the flame retardant with respect to the woven structure is 1.5 to 3.0 g/m².

Preferably, the weight ratio of the flame retardant to the organofluorine compound in the impregnated woven structure is 10 to 35, for example 10 to 30.

Preferably, the total amount of the organofluorine compound, the crosslinking agent and the flame retardant with respect to the woven structure is 1.0 to 5.0 g/m², preferably 2.0 to 3.5 g/m².

### Coating layer

The coated woven fabric according to the invention comprises a coating layer provided on one side or both sides of the impregnated woven structure. The coating layer gives the desired high water resistance to the coated woven fabric according to the invention as well as hold the woven yarns together to maintain the shape and properties of the coated woven fabric to allow its use in a protective clothing.

The coated woven fabric according to the invention may be obtained by applying an aqueous solution comprising the polyurethane and optional components on one or both sides of the impregnated woven structure and curing the solution, by which the polyurethane and the optional components form the coating fixed to the impregnated woven structure. The application of the polyurethane and the optional components may be performed in one step or two or more steps.

### Polyurethane

Preferably, the polyurethane is an aromatic polyurethane.

Preferably, the amount of the polyurethane is 1 to 10 g/m², preferably 3 to 6 g/m², with respect to the woven structure.

The polyurethane may be applied as an aqueous composition comprising the organofluorine compound e.g. in an amount of 20 to 40 wt%.

### Other components of coating solution

The coating layer may further comprise at least one of a styrene-acrylic copolymer, a defoaming agent, a crosslinking agent, a flame retardant and a thickener.

The styrene-acrylic copolymer enhances the water resistance.

Preferably, the amount of the styrene-acrylic copolymer is 1 to 10 g/m², preferably 3 to 8 g/m², with respect to the woven structure.

Preferably, the weight ratio of the styrene-acrylic copolymer to the polyurethane in the coating layer is 0.5 to 2.5, preferably 0.6 to 2.2.

Preferably, the defoaming agent is an oil-silicon emulsion of a water soluble amphiphilic copolymer.

Preferably, the amount of the defoaming agent is 0.10 to 0.25 g/m² with respect to the woven structure.

Preferably, the weight ratio of the defoaming agent to the polyurethane in the coating layer is 0.01 to 0.08, preferably 0.02 to 0.07.

The crosslinking agent may e.g. be a polyisocyanate. By the use of the crosslinking agent, water-oil-dirt-repellent properties and resistance to water column pressure are enhanced.

Preferably, the amount of the crosslinking agent is 1.0 to 2.5 g/m2 with respect to the woven structure.

Preferably, the weight ratio of the crosslinking agent to the polyurethane in the coating layer is 0.1 to 0.8, preferably 0.2 to 0.7.

Preferably, the flame retardant comprises antimony trioxide and/or ammonium polyphosphate.

When the flame retardant comprises antimony trioxide, the flame retardant preferably comprises antimony trioxide and a halogen source. This is advantageous in that it gives a fire-resistant coating without soapiness.

Preferably, the total amount of the antimony trioxide and the halogen source is 3.0 to 7.0 g/m² with respect to the woven structure.

Preferably, the weight ratio of the total amount of the antimony trioxide and the halogen source to the polyurethane in the coating layer is 0.5 to 2.0, preferably 0.6 to 1.7.

When the flame retardant comprises ammonium polyphosphate, the ammonium polyphosphate is preferably a polymer with more than 1000 repeat units and has crystalline phase 2. This gives a fire-resistant coating with specified waterproof properties.

Preferably, the amount of ammonium polyphosphate is 10 to 20 g/m² with respect to the woven structure.

Preferably, the weight ratio of ammonium polyphosphate to the polyurethane in the coating layer is 1.5 to 7.0, preferably 2.0 to 6.0.

Preferably, the thickener is an acrylic polymer. This improves the coating process.

Preferably, the amount of the thickener is 0.10 to 0.20 g/m² with respect to the woven structure.

Preferably, the weight ratio of the thickener to the polyurethane in the coating layer is 0.01 to 0.1.

### Proportion of elements

Preferably, the amount of the woven structure with respect to the impregnated woven structure is 95 to 99.5 wt%, preferably 97 to 99.0 wt%.

Preferably, the amount of the woven structure with respect to the coated woven fabric is 60 to 90 wt%, preferably 65 to 85 wt%.

Preferably, the amount of the impregnated woven structure with respect to the coated woven fabric is 60 to 90 wt%, preferably 65 to 85 wt%. Preferably, the amount of the coating layer with respect to the coated woven fabric is 10 to 40 wt%, preferably 15 to 35 wt%.

### Properties of coated woven fabric

Preferably, the coated woven fabric according to the invention has a density of 150 to 230 g/m², preferably 170 to 220 g/m², more preferably 175 to 210 g/m², as measured according to GOST 17073.

Preferably, the coated woven fabric according to the invention has a tensile strength of at least 2440 N measured in the warp direction according to GOST 17316 at 23 °C.

Preferably, the coated woven fabric according to the invention has a tensile strength of at least 2440 N measured in the weft direction according to GOST 17316 at 23 °C.

Preferably, the coated woven fabric according to the invention has a tensile strength of at least 2440 N measured in the warp direction according to GOST 17316 at 300 °C.

Preferably, the coated woven fabric according to the invention has a tensile strength of at least 2440 N measured in the weft direction according to GOST 17316 at 300 °C.

Preferably, the coated woven fabric according to the invention has a tear strength of at least 300 N measured in the warp direction according to GOST 17074 at 23 °C.

Preferably, the coated woven fabric according to the invention has a tear strength of at least 300 N measured in the weft direction according to GOST 17074at 23 °C.

Preferably, the coated woven fabric according to the invention has a resistance to multiple bending measured according to GOST 8978 of at least 100 kilocycles.

Preferably, the coated woven fabric according to the invention has an open flame resistance according to GOST P53264 of 0 second, i.e. it has 0 second combustion after exposure to open flame for 15 seconds.

Preferably, the coated woven fabric according to the invention has an oxygen index measured according to GOST12.1.044 of 15 to 50%.

Preferably, the coated woven fabric according to the invention the required water resistance according to GOST P 53264 - 2009 of 1000 mm of water column applied as a static load for 1 minute.

The invention further provides a process for making the coated woven fabric according to the invention, comprising the steps of:
i) plain weaving the yarns to obtain the woven structure,
ii) immersing the woven structure in an aqueous solution comprising the organofluorine compound,
iii) curing the aqueous solution of step ii) to obtain the impregnated woven structure,
iv) applying an aqueous composition comprising the polyurethane on one or both sides of the impregnated woven structure and
v) curing the aqueous solution of step iv) to obtain the coating layer provided on at least one side of the impregnated woven structure.

### Protective clothing

The present invention further relates to a protective clothing comprising the coated woven fabric according to the invention. Preferably, the protective clothing is a firefighter protective clothing.

Preferably, the protective clothing according to the invention comprises, in this order,
a) an outer layer made of the coated woven fabric according to the invention,
b) an intermediate layer made of a non-woven fabric made of meta aramid fibers and
c) an inner lining layer made of a woven fabric made of staple meta aramid fibers, wherein the intermediate layer faces the coating layer of the outer layer.

During use, the outer layer is to be farthest from the user among a)-c). Preferably, the inner lining layer is to be in contact with the user and provides comfort to the user.

Preferably, the outer layer and the intermediate layer are partly attached to each other, i.e. attached to each other such that there are parts that are adhered to each other and parts that are not adhered to each other. This can be achieved e.g. by adhering only the edges of the outer layer and the intermediate layer or by adhering the outer layer and the intermediate layer intermittently. The parts not adhered to each other have air in-between, which works as a heat insulating agent.

In some preferred embodiments, the protective clothing according to the invention consists of the layers a), b) and c).

In some preferred embodiments, the protective clothing according to the invention further comprises between the layers b) and c) a layer made of the woven fabric according to the invention. In this additional layer, the woven fabric according to the invention may be of the same type or different type from the woven fabric according to the invention in the outer layer. When present, the additional layer is provided such that the intermediate layer faces the coating layer of said additional layer.

### Process for making protective clothing

The invention further relates to a process for making the protective clothing according to the invention, comprising the steps of attaching, in this order, the outer layer, the intermediate layer and the inner lining layer.

It is noted that the invention relates to the subject-matter defined in the independent claims alone or in combination with any possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

### Examples

Fibers of polyparaphenylene terephthalamide having a linear density of as shown in Table 2 were twisted to obtain yarns having a twisting level Z of 120. The yarns were subjected to plain weaving to obtain a woven structure. The woven structure was impregnated with an aqueous impregnating solution and subsequently cured. Subsequently an aqueous coating solution was applied on one side of the impregnated woven structure and cured to obtain a coated woven fabric.

The compositions of the impregnating solution and the coating solution used for making the coated woven fabric of Ex 2 are shown in Table 1. The amounts are indicated as weight concentrations (g/m²) with respect to the woven structure. The components and their proportions of the the impregnating solution and the coating solution used for making the coated woven fabric of CEx 1 and CEx 3 were identical to those used for making the coated woven fabric of Ex 2.

**Table 1 (amounts in g/m²)**

| | impregnating solution | coating solution |
|---|---|---|
| Water dispersion of aromatic polyurethane, dry content 28-35 wt% (Aquapol 10) | | 11.80-16.85 (3.30-5.90)* |
| Water dispersion of styrene-acrylic copolymer, dry content 38-45 wt% (Lacroten) | | 10.55-15.50 (4.01-7.00)* |
| Defoaming agent (Entschaumer N) | | 0.14-0.20 |
| Polyisocyanate crosslinking agent (Igkaguard BLO (FF)) | 0.14-0.20 | 1.4-2.0 |
| Flame retardant: Water dispersion of antimony trioxide and halogen source, dry content 63.0-66.0 wt% (FLACAVON FH9004/123L) | | 5.8-8.3 (3.77-5.48)* |
| Flame retardant: Branched ammonium polyphosphate with high degree of polymerization (n> 1000) with crystalline phase 2 (Antipiren APP501) | | 13-18.6 |
| Acrylic thickener (Rheovis HS 1212) | | 0.11-0.15 |
| Flame retardant: Low polymerization ammonium polyphosphate with crystalline phase 1 (Antipiren APP-3) | 1.9-2.8 | |
| Aqueous composition of polymer based on fluorine-containing vinyl monomers, dry content 16.5 wt% | 0.6-0.85 (0.10-0.14)* | |

| | | |
|---|---|---|
| * amount of dry content | | |

Various properties of the coated woven fabric were measured and are shown in Table 2.

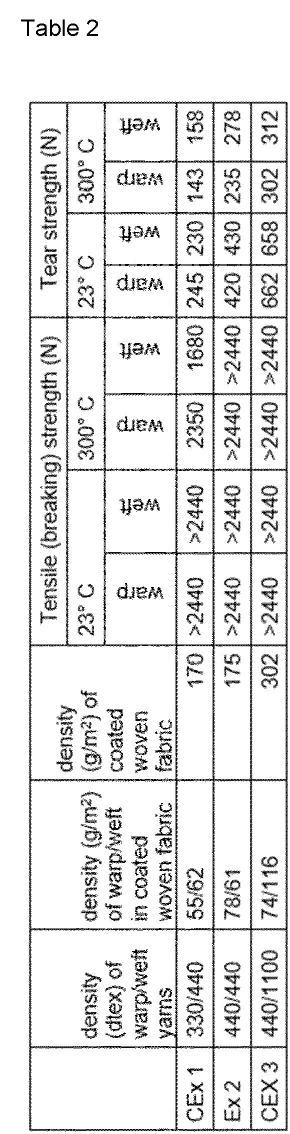

The density of the coated woven fabric was measured according to GOST 17073.

The tensile strength of the coated woven fabric in the warp direction and the weft direction was measured according to GOST 17316 at 23 °C and 300 °C.

The tear strength of the coated woven fabric was measured in the warp direction and the weft direction according to GOST 17074 at 23 °C and 300 °C.

The resistance to multiple bending of the coated woven fabric was measured according to GOST 8978. It was 90-100 Kcycles for CEx 1 while it was more than 100 Kcycles for Ex 2 and CEx 3.

The open flame resistance of the coated woven fabric was measured according to GOST P53264. For CEx 1, Ex 2 and CEx 3, it was 0 second combustion after exposure to open flame for 15 seconds.

The oxygen index the coated woven fabric was measured according to GOST12.1.044. For CEx 1, Ex 2 and CEx 3, the oxygen index was 31 %.

The coated woven fabric of CEx 1, Ex 2 and CEx 3 was determined to have the required water resistance determined according to GOST P 53264 - 2009 of 1000 mm of water column applied as a static load during 1 minute.

It can accordingly be understood that the fabric according to the invention has the combination of a lower weight and superior mechanical properties compared to the fabric not according to the invention.

## Claims

1. A coated woven fabric comprising
- an impregnated woven structure comprising a woven structure of plain woven yarns of twisted para-aramid fibers, wherein the impregnated woven structure is impregnated with an organofluorine compound and the fibers have a linear density of 350 to 1000 dtex and
- a coating layer comprising a polyurethane provided on at least one side of the impregnated woven structure.

2. The coated woven fabric according to any one of the preceding claims, wherein the para-aramid fibers are fibers of polyparaphenylene terephthalamide polyparaphenylene terephthalamide and/or a copolyparaphenylene-3,4'-oxydiphenylene terephthalamide.

3. The coated woven fabric according to any one of the preceding claims, wherein the yarns of the twisted para-aramid fibers have a twisting level Z of 100 to 150.

4. The coated woven fabric according to any one of the preceding claims, wherein the linear density of the fibers is 370 to 900 dtex, preferably 380 to 800 dtex, more preferably 390 to 700 dtex, more preferably 400 to 600 dtex, more preferably 410 to 500 dtex, more preferably 420 to 450 dtex.

5. The coated woven fabric according to any one of the preceding claims, wherein the organofluorine compound is a polymer comprising repeat units of a fluorine-containing vinyl monomer, preferably wherein the amount of the organofluorine compound with respect to the woven structure is 0.05 to 0.20 g/m², more preferably 0.09 to 0.15 g/m².

6. The coated woven fabric according to any one of the preceding claims, wherein the impregnated woven structure further comprises a crosslinking agent and/or a flame retardant.

7. The coated woven fabric according to any one of the preceding claims, wherein the polyurethane is an aromatic polyurethane, preferably wherein the amount of the polyurethane with respect to the woven structure is 1 to 10 g/m², preferably 2 to 7 g/m².

8. The coated woven fabric according to any one of the preceding claims, wherein the coating layer further comprises at least one of a styrene-acrylic copolymer, a defoaming agent, a crosslinking agent, a flame retardant and a thickener.

9. The coated woven fabric according to any one of the preceding claims, wherein the coated woven fabric has a density of 100 to 200 g/m², preferably 170 to 180 g/m², as measured according to GOST 17073, and preferably at least one, more preferably all, of:
a tensile strength of at least 2440 N measured in the warp direction according to GOST 17316 at 23 °C,
a tensile strength of at least 2440 N measured in the weft direction according to GOST 17316 at 23 °C,
a tensile strength of at least 2440 N measured in the warp direction according to GOST 17316 at 300 °C,
a tensile strength of at least 2440 N measured in the weft direction according to GOST 17316 at 300 °C,
a tear strength of at least 300 N measured in the warp direction according to GOST 17074 at 23 °C,
a tear strength of at least 300 N measured in the weft direction according to GOST 17074 at 23 °C,
a resistance to multiple bending measured according to GOST 8978 of at least 100 kilocycles,
an open flame resistance according to GOST P53264 of 0 second,
an oxygen index measured according to GOST12.1.044 of 15 to 50 % and
the required water resistance according to GOST P 53264 - 2009 of 1000 mm of water column applied as a static load for 1 minute.

10. A process for making the coated woven fabric according to any one of the preceding claims, comprising the steps of:
i) weaving the yarns to obtain the woven structure,
ii) immersing the woven structure in an aqueous solution comprising the organofluorine compound,
iii) curing the aqueous solution of step ii) to obtain the impregnated woven structure,
iv) applying an aqueous composition comprising the polyurethane on one or both sides of the impregnated woven structure and
v) curing the aqueous solution of step iv) to obtain the coating layer provided on at least one side of the impregnated woven structure.

11. A protective clothing comprising the woven fabric according to any one of claims 1 to 9.

12. The protective clothing according to claim 11 comprising or consisting of, in this order,
a) an outer layer made of the coated woven fabric according to the invention,
b) an intermediate layer made of a non-woven fabric made of meta aramid fibers and
c) an inner lining layer made of a woven fabric made of staple meta aramid fibers, wherein the intermediate layer faces the coating layer of the outer layer.

13. The protective clothing according to claim 12, wherein the outer layer and the intermediate layer are partly attached to each other.

14. The protective clothing according to claim 12 or 13, wherein the protective clothing is a firefighter protective clothing.

15. Use of the coated woven fabric according to any one of claims 1 to 9 for making a firefighter protective clothing.
